# EUROPEAN PATENT APPLICATION

(11) **EP 4 683 335 A1**
(43) Date of publication of application: **21.01.2026**
(21) Application number: 24770035.4
(22) Date of filing: 15.03.2024
(51) Int. Cl.: H04N 21/4788, H04N 21/2187, H04N 21/462

(54) **DATA PROCESSING METHOD AND DEVICE**

(30) Priority: 15.03.2023 CN 202310269658
(71) Applicant: Beijing Zitiao Network Technology Co., Ltd., Beijing 100190 (CN)
(72) Inventor: DENG, Zhuoyao, Beijing 100028 (CN)
(74) Representative: Isarpatent
(86) International application number: PCT/CN2024/081981
(87) International publication number: WO 2024/188345

(57) **Abstract**

A data processing method, applied to a client. The method comprises: acquiring first seat data to be processed; calculating the difference between said first seat data and stored second seat data; and when it is determined that there is no difference between said first seat data and the second seat data, discarding said first seat data. The present disclosure can improve the processing efficiency of seat data.

## Description

This application claims priority to Chinese Patent Application No. 202310269658.1 filed on March 15, 2023, the entire disclosure of which is incorporated herein by reference as part of the present disclosure.

### TECHNICAL FIELD

The present disclosure relates to a data processing method and a device.

### BACKGROUND

With the development of the technology, the emergence of live streaming over a network enriches user interaction scenarios. In one example, a plurality of users may interact by connecting their audio connection in live streaming.

However, in a scenario of audio connection in live streaming, known microphone position data processing solutions are low in microphone position data processing efficiency. Therefore, there is an urgent need for a solution that can solve the above problem.

### SUMMARY

In order to solve or at least partially solve the above technical problem, embodiments of the present disclosure provide a data processing method and a device.

On the first aspect, embodiments of the present disclosure provide a data processing method, comprising: obtaining first microphone position data to be processed; calculating a difference between the first microphone position data and stored second microphone position data; and discarding the first microphone position data in response to determining that there is no difference between the first microphone position data and the second microphone position data.

Optionally, the first microphone position data is current microphone position data to be processed, and the second microphone position data is historical microphone position data corresponding to the first microphone position data.

Optionally, the method further comprises: retaining the first microphone position data in response to determining that there is a difference between the first microphone position data and the second microphone position data.

Optionally, the method further comprises: replacing the stored second microphone position data with the first microphone position data.

Optionally, the obtaining first microphone position data to be processed comprises: receiving data sent from a plurality of different data sources; and obtaining the first microphone position data according to the data sent from the plurality of different data sources.

Optionally, the retaining the first microphone position data comprises: sending data requested by a business processing module from difference data to the business processing module, wherein the difference data is difference data between the first microphone position data and the second microphone position data.

Optionally, the first microphone position data comprises first microphone position basic data and first microphone position additional data, and the second microphone position data comprises second microphone position basic data and second microphone position additional data; and the calculating a difference between the first microphone position data and stored second microphone position data comprises: calculating a difference between the first microphone position basic data and the second microphone position basic data, and calculating a difference between the first microphone position additional data and the second microphone position additional data.

Optionally, there being no difference between the first microphone position data and the second microphone position data comprises: there being no difference between the first microphone position basic data and the second microphone position basic data, and there being no difference between the first microphone position additional data and the second microphone position additional data.

Optionally, the method further comprises: determining difference data between the first microphone position data and the second microphone position data; and playing audio and video data in the difference data, or refreshing a display content of a live-streaming audio connection page according to the difference data.

On the second aspect, the embodiments of the present disclosure further provide a data processing apparatus, comprising: an obtaining unit configured to obtain first microphone position data to be processed; a calculation unit configured to calculate a difference between the first microphone position data and stored second microphone position data; and a discarding unit configured to discard the first microphone position data in response to determining that there is no difference between the first microphone position data and the second microphone position data.

Optionally, the first microphone position data is current microphone position data to be processed, and the second microphone position data is historical microphone position data corresponding to the first microphone position data.

Optionally, the apparatus further comprises a retention unit configured to retain the first microphone position data in response to determining that there is a difference between the first microphone position data and the second microphone position data.

Optionally, the apparatus further comprises a replacement unit configured to replace the stored second microphone position data with the first microphone position data.

Optionally, the obtaining unit is configured to receive data sent from a plurality of different data sources; and obtain the first microphone position data according to the data sent from the plurality of different data sources.

Optionally, the retention unit is configured to send data requested by a business processing module from difference data to the business processing module, wherein the difference data is difference data between the first microphone position data and the second microphone position data.

Optionally, the first microphone position data comprises first microphone position basic data and first microphone position additional data, and the second microphone position data comprises second microphone position basic data and second microphone position additional data; and the calculation unit is configured to calculate a difference between the first microphone position basic data and the second microphone position basic data, and calculate a difference between the first microphone position additional data and the second microphone position additional data.

Optionally, there being no difference between the first microphone position data and the second microphone position data comprises: there being no difference between the first microphone position basic data and the second microphone position basic data, and there being no difference between the first microphone position additional data and the second microphone position additional data.

Optionally, the apparatus further comprises a determination unit configured to determine difference data between the first microphone position data and the second microphone position data; and a processing unit configured to play audio and video data in the difference data, or refresh a display content of a live-streaming audio connection page according to the difference data.

On the third aspect, the embodiments of the present disclosure provide a device, comprising a processor and a memory, wherein the processor is configured to execute instructions stored in the memory to cause the device to perform the data processing method according to any one embodiment described in the above first aspect.

On the fourth aspect, the embodiments of the present disclosure provide a computer-readable storage medium, comprising instructions that instruct a device to perform the data processing method according to any one embodiment described in the above first aspect.

On the fifth aspect, the embodiments of the present disclosure provide a computer program product which, when run by a computer, causes the computer to perform the data processing method according to any one embodiment described in the above first aspect.

### BRIEF DESCRIPTION OF DRAWINGS

To describe the technical solutions in the embodiments of the present disclosure more clearly, the accompanying drawings required to describe the embodiments will be briefly described below. Apparently, the accompanying drawings in the following description are only some embodiments described in the present disclosure. A person of ordinary skill in the art may further derive other accompanying drawings from these embodiments without creative efforts.
Fig. 1 is a flowchart of a data processing method provided by an embodiment of the present disclosure;
Fig. 2 is a structural schematic diagram of a client provided by an embodiment of the present disclosure;
Fig. 3 is a structural schematic diagram of a data processing apparatus provided by an embodiment of the present disclosure; and
Fig. 4 is a structural schematic diagram of an electronic device provided by an embodiment of the present disclosure.

### DETAILED DESCRIPTION

In order to provide a better understanding of the solutions of the present disclosure for those skilled in the art, the technical solutions in the embodiments of the present disclosure will be described clearly and completely with reference to the accompanying drawings in the embodiments of the present disclosure. Apparently, the described embodiments are merely some rather than all of the embodiments of the present disclosure. All other embodiments derived from the embodiments in the present disclosure by those of ordinary skill in the art without creative efforts shall fall within the protection scope of the present disclosure.

The inventors of the present disclosure have found through research that in a scenario of audio connection interaction, in the related art, a client may process microphone position data. However, all the microphone position data is usually retained, leading to low processing efficiency.

Moreover, in the related art, a business processing module of the client may process the microphone position data. In this case, the data processing logic of the business processing module is complex, and the data processing efficiency is low. In a particular example, a business module may obtain microphone position data directly from a data source and process the microphone position data. In this way, if a new data source is added, each business processing module needs to process data from the new data source, leading to a large data processing quantity and low data processing efficiency of the whole client.

To solve the above problems, embodiments of the present disclosure provide a data processing method and apparatus.

The microphone position data mentioned in the embodiments of the present disclosure may be data related to the audio connection interaction.

Various non-limiting implementations of the present disclosure will be described in detail below with reference to the accompanying drawings.

### Example method

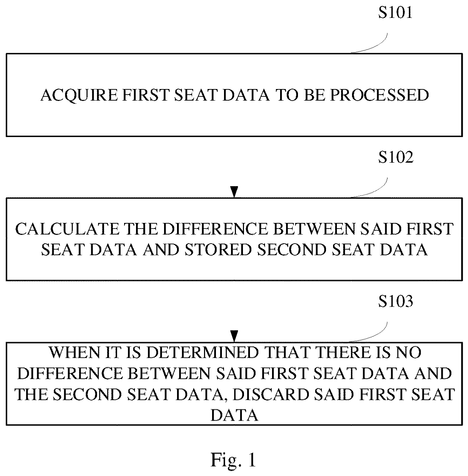

With reference to Fig. 1, there is shown a flowchart of a data processing method provided by an embodiment of the present disclosure. In this embodiment, the data processing method may be applied to a client. The client may include a data processing module and at least one business processing module. In one example, the data processing method may, for example, include the following steps S101-S103.

**In** one example, the steps S101-S103 may be performed by the data processing module included in the client.

S101: first microphone position data to be processed is obtained.

In an embodiment of the present disclosure, the first microphone position data may include microphone position data corresponding to at least one of a plurality of objects participating in the audio connection interaction. **In** one example, the first microphone position data may include first microphone position basic data and first microphone position additional data. The first microphone position additional data may also be construed as business data or referred to as first microphone position business data.

In one example, the first microphone position data is current microphone position data to be processed of the client. After the client obtains the current microphone position data to be processed, the subsequent step S102 may be further performed to determine how to process the microphone position data to be processed.

**In** an embodiment of the present disclosure, the first microphone position basic data may be microphone position data irrelevant to a business. The first microphone position basic data includes, but is not limited to, data such as a audio connection object avatar and a audio connection object name.

**In** an embodiment of the present disclosure, the business data refers to microphone position data related to a business. The embodiments of the present disclosure have no particular limitation on the business data. The business data may be related to a specific business. For example, the business data may include interaction parameters corresponding to the objects participating in the audio connection interaction, and the like, which will not be enumerated one by one.

**In** one example, the data processing module may obtain the first microphone position data from a server and/or other modules.

In another example, the data processing module may obtain the first microphone position data through the following steps A1-A2.

In step A1, data sent from a plurality of data sources is received.

**In** an embodiment of the present disclosure, the data source may be construed as a source from which data is or generated within the client. **In** an embodiment of the present disclosure, the data sources may be divided according to a certain rule such that when a new business logic is added, the business data can be managed according to the data sources. In one example, the data sources may be divided by business function. **In** other words, for the plurality of data sources, the plurality of data sources have different business functions. The business function in an embodiment of the present disclosure may correspond to a certain sub-business function in the business function. As an example, the business function corresponding to each business may be determined. For a certain business function, the data of each business corresponding to the business function is from the data source corresponding to the business function.

The embodiments of the present disclosure have no particular limitation on the plurality of data sources. In one example, the plurality of data sources may, for example, include one or more of: a data source corresponding to microphone position basic data, a data source corresponding to audio and video communication, a data source corresponding to supplemental enhancement information (SEI), and a data source corresponding to a specific sub-business function.

**In** step A2, the first microphone position data is obtained according to data sent from the plurality of different data sources.

After obtaining the data sent from the plurality of different data sources, the data processing module may integrate the data sent from the plurality of different data sources to obtain the first microphone position data.

As described previously, the first microphone position data may include the first microphone position basic data and the first microphone position additional data.

**In** one particular example, the microphone position basic data may correspond to a separate data source. In this case, the data processing module may directly extract the first microphone position basic data provided by the data source corresponding to the microphone position basic data. The microphone position additional data may be audio connection audio and video data, audio connection interaction data, etc.

The data processing module integrating the data sent from the plurality of data sources to obtain the first microphone position additional data is now described by taking as an example that the data processing module integrates the data sent from the plurality of data sources to obtain business data corresponding to a first business. The data processing module may extract the data corresponding to the first business from the plurality of data sources, and integrate the extracted data corresponding to the first business, thereby obtaining the business data corresponding to the first business. The business data corresponding to the first business may be any of the at least one type of business data.

S102: a difference between the first microphone position data and stored second microphone position data is calculated.

**In** an embodiment of the present disclosure, the client may cache the second microphone position data. For example, the second microphone position data is historical microphone position data stored by the data processing module. **In** one example, the second microphone position data is historical microphone position data corresponding to the first microphone position data. As a particular example, the second microphone position data may be the microphone position data cached by the client last time. The first microphone position data and the second microphone position data may be the microphone position data of the same object. **In** one example, the second microphone position data may be the microphone position data used by the business processing module of the client to perform a related operation last time. The second microphone position data may include second microphone position basic data and second microphone position additional data.

After obtaining the first microphone position data, the data processing module may calculate the difference between the first microphone position data and the second microphone position data to obtain a calculation result. The embodiments of the present disclosure have no particular limitation on the implementation of calculating the difference between the first microphone position data and the second microphone position data. **In** one example, a difference between the first microphone position basic data and the second microphone position basic data may be calculated, and a difference between the first microphone position additional data and the second microphone position additional data may be calculated, thereby obtaining the calculation result of the difference calculation. For example, the first microphone position basic data and the second microphone position basic data may be compared, and the first microphone position additional data and the second microphone position additional data may be compared, thereby obtaining the calculation result of the difference calculation. **In** another example, other algorithms capable of calculating a difference between data may be adopted to calculate the difference between the first microphone position data and the second microphone position data, thereby obtaining the calculation result.

Regarding the calculation result, the following needs to be noted:

**In** one example, the calculation result may indicate that there is no difference between the first microphone position data and the second microphone position data. There being no difference between the first microphone position data and the second microphone position data may refer to the first microphone position data and the second microphone position data being the same. The first microphone position data and the second microphone position data being the same may refer to the first microphone position basic data and the second microphone position basic data being the same, and the first microphone position additional data and the second microphone position additional data being the same.

**In** another example, the calculation result may indicate that there is a difference between the first microphone position data and the second microphone position data. There being a difference between the first microphone position data and the second microphone position data may refer to the first microphone position data and the second microphone position data being different. The first microphone position data and the second microphone position data being different may refer to the first microphone position basic data and the second microphone position basic data being different, and the first microphone position additional data and the second microphone position additional data being different.

**In** one example, if there is a difference between the first microphone position data and the second microphone position data, the calculation result may include difference data between the first microphone position data and the second microphone position data.

S103: when it is determined that there is no difference between the first microphone position data and the second microphone position data, the first microphone position data is discarded.

**In** an embodiment of the present disclosure, if the calculation result indicates that there is no difference between the first microphone position data and the second microphone position data, the data processing module discards the first microphone position data. Thus, when there is no difference between the first microphone position data and the second microphone position data, the business processing module does not need to perceive the first microphone position data, thereby reducing the data processing quantity of the business processing module. Correspondingly, the data processing efficiency of the business processing module is improved.

**In** addition, as can be known from the above description, in an embodiment of the present disclosure, the data processing module is added to the client to process data such that the business processing module does not directly process the data from the data source. It can be avoided that a plurality of business processing modules repeatedly process the data from the data source. Correspondingly, the data processing efficiency of the whole client is improved.

**In** one example, if the calculation result indicates that there is a difference between the first microphone position data and the second microphone position data, the data processing module may not discard the first microphone position data, and instead retain the first microphone position data, in order to perform a corresponding processing measure based on the first microphone position data.

**In** one example, in a particular implementation of retaining the first microphone position data, for example, the difference data between the first microphone position data and the second microphone position data may be sent to the business processing module such that the business processing module processes the difference data. **In** one example, the data processing module may send the first microphone position data including the difference data to the business processing module, thus achieving the effect of sending the difference data to the business processing module. In another example, the business processing module may request the desired data from the data processing module according to its own need. For example, a first business processing module may request microphone position basic data from the data processing module, and a second business processing module may request data related to audio and video communication from the data processing module. **In** this case, the data processing module may send the data requested by the business processing module in the difference data to the business processing module, thereby meeting the requirement of a business model.

**In** one example, if there is a difference between the first microphone position data and the second microphone position data, the data processing module may replace the stored second microphone position data with the first microphone position data. For example, the data processing module may delete the second microphone position data and cache the first microphone position data. For another example, the data processing module may replace the corresponding data in the second microphone position data with the difference data. After the data processing module replace the cached second microphone position data with the first microphone position data, the data stored by the client is the first microphone position data. Thus, after the data processing module obtains third microphone position data, how to process the third microphone position data may be determined based on the first microphone position data. For example, if there is a difference between the third microphone position data and the first microphone position data, the data processing module may retain the third microphone position data. For another example, if there is no difference between the third microphone position data and the first microphone position data, the data processing module may discard the third microphone position data.

**In** one example, if there is a difference between the first microphone position data and the second microphone position data, the client may further determine the difference data between the first microphone position data and the second microphone position data. Specifically, the data processing module may obtain the difference data according to the above-mentioned calculation result of the difference calculation. Further, the client may send the difference data to the business processing module, and the difference data is processed by the business processing module. **In** an embodiment of the present disclosure, the business processing module processes the difference data, e.g., plays and/or presents the difference data. In one example, when the difference data includes audio and video data, the business processing module processing the difference data may refer to playing the audio and video data in the difference data. If the difference data relates to data presented on a page, the business processing module processes the difference data, e.g., refreshes a display content on the page according to the difference data. In a scenario of audio connection interaction in live streaming, the business processing module may refresh a display content on a live-streaming audio connection page according to the difference data. The embodiments of the present disclosure have no particular limitation on the display content on the live-streaming audio connection page. The display content on the live-streaming audio connection page may be determined according to an actual situation.

Next, the data processing method provided in the embodiments of the present disclosure is described in combination with a structure of a client.

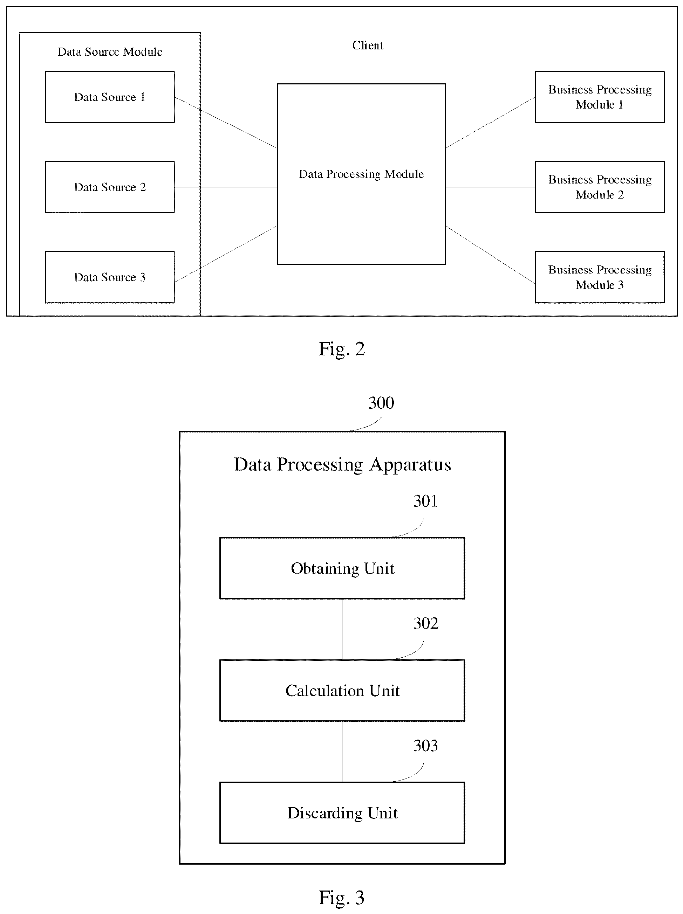

With reference to Fig. 2, there is shown a structural schematic diagram of a client provided by an embodiment of the present disclosure. As shown in Fig. 2, the client includes a data source module, a data processing module, and a plurality of business processing modules. The data source module includes modules corresponding to a plurality of data sources. As shown in Fig. 2, the data source module includes a data source 1, a data source 2, and a data source 3, and the plurality of business processing modules include a business processing module 1, a business processing module 2, and a business processing module 3.

The data processing module may obtain data from the data source module and integrate the obtained data to obtain the first microphone position data. The data processing module sends the difference data to the plurality of business processing modules when there is a difference between the first microphone position data and the second microphone position data. When there is no difference between the first microphone position data and the second microphone position data, the data processing module discards the first microphone position data.

It needs to be noted that Fig. 2 is illustrated only for the purpose of facilitating the understanding of the solution and does not constitute a limitation on the embodiments of the present disclosure.

### Example device

Based on the data processing method provided by the above embodiments, an embodiment of the present disclosure further provides a data processing apparatus which will be described below with reference to the drawing.

With reference to Fig. 3, there is shown a structural schematic diagram of a data processing apparatus provided by an embodiment of the present disclosure. The data processing apparatus 300 may, for example, specifically include an obtaining unit 301, a calculation unit 302, and a discarding unit 303.

The obtaining unit 301 is configured to obtain first microphone position data to be processed.

The calculation unit 302 is configured to calculate a difference between the first microphone position data and stored second microphone position data.

The discarding unit 303 is configured to discard the first microphone position data in response to determining that there is no difference between the first microphone position data and the second microphone position data.

Optionally, the first microphone position data is current microphone position data to be processed, and the second microphone position data is historical microphone position data corresponding to the first microphone position data.

Optionally, the data processing apparatus further includes a retention unit configured to, in response to determining that there is a difference between the first microphone position data and the second microphone position data, retain the first microphone position data.

Optionally, the data processing apparatus further includes a replacement unit configured to replace the stored second microphone position data with the first microphone position data.

Optionally, the obtaining unit 301 is configured to receive data sent from a plurality of different data sources; and obtain the first microphone position data according to the data sent from the plurality of different data sources.

Optionally, the retention unit is configured to send data requested by a business processing module in difference data to the business processing module, wherein the difference data is difference data between the first microphone position data and the second microphone position data.

Optionally, the first microphone position data includes first microphone position basic data and first microphone position additional data, and the second microphone position data includes second microphone position basic data and second microphone position additional data.

The calculated unit 302 is configured to calculate a difference between the first microphone position basic data and the second microphone position basic data, and calculate a difference between the first microphone position additional data and the second microphone position additional data.

Optionally, there being no difference between the first microphone position data and the second microphone position data includes: there being no difference between the first microphone position basic data and the second microphone position basic data, and there being no difference between the first microphone position additional data and the second microphone position additional data.

Optionally, the data processing apparatus further includes a determination unit configured to determine difference data between the first microphone position data and the second microphone position data; and a processing unit configured to play audio and video data in the difference data, or refresh a display content on a live-streaming audio connection page according to the difference data.

Since the data processing apparatus 300 is an apparatus corresponding to the data processing method provided by the above method embodiments. The specific implementations of the units of the data processing apparatus 300 belong to the same concept with the above method embodiments. Therefore, for the specific implementations of the units of the data processing apparatus 300, a reference may be made to the related description parts of the above method embodiments, which will be redundantly described here.

An embodiment of the present disclosure further provides a device, including a processor and a memory. The processor is configured to execute instructions stored in the memory to cause the device to perform the data processing method described in any of the above method embodiments.

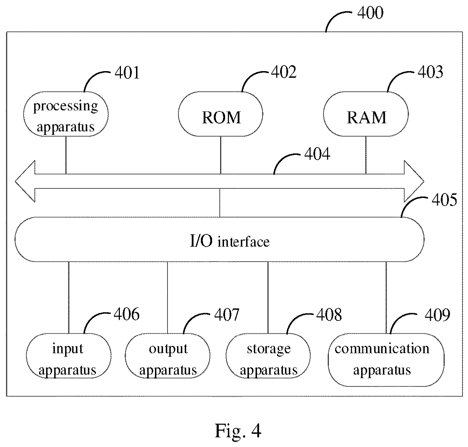

With reference to Fig. 4, it shows a structure schematic diagram of an electronic device 400 suitable for achieving the the embodiment of the present disclosure. The electronic device 400 in the embodiment of the present disclosure may include but not be limited to a mobile terminal such as a mobile phone, a notebook computer, a digital broadcasting receiver, a personal digital assistant (PDA), a PAD (tablet computer), a portable multimedia player (PMP), a vehicle terminal (such as a vehicle navigation terminal), and a fixed terminal such as a digital television (TV) and a desktop computer. The electronic device shown in Fig. 4 is only an example and should not impose any limitations on the functions and use scopes of the embodiments of the present disclosure.

As shown in Fig. 4, the electronic device 400 may include a processing apparatus (such as a central processing unit, and a graphics processor) 401, it may execute various appropriate actions and processes according to a program stored in a read-only memory (ROM) 402 or a program loaded from a storage apparatus 408 to a random access memory (RAM) 403. In RAM 403, various programs and data required for operations of the electronic device 400 are also stored. The processing apparatus 401, ROM 402, and RAM 403 are connected to each other by a bus 404. An input/output (I/O) interface 405 is also connected to the bus 404.

Typically, the following apparatuses may be connected to the I/O interface 405: an input apparatus 406 such as a touch screen, a touchpad, a keyboard, a mouse, a camera, a microphone, an accelerometer, and a gyroscope; an output apparatus 407 such as a liquid crystal display (LCD), a loudspeaker, and a vibrator; a storage apparatus 408 such as a magnetic tape, and a hard disk drive; and a communication apparatus 409. The communication apparatus 409 may allow the electronic device 400 to wireless-communicate or wire-communicate with other devices so as to exchange data. Although Fig. 4 shows the electronic device 400 with various apparatuses, it should be understood that it is not required to implement or possess all the apparatuses shown. Alternatively, it may implement or possess the more or less apparatuses.

Specifically, according to the embodiment of the present disclosure, the process described above with reference to the flow diagram may be achieved as a computer software program. For example, an embodiment of the present disclosure includes a computer program product, it includes a computer program loaded on a non-transient computer-readable medium, and the computer program contains a program code for executing the method shown in the flow diagram. In such an embodiment, the computer program may be downloaded and installed from the network by the communication apparatus 409, or installed from the storage apparatus 408, or installed from ROM 402. When the computer program is executed by the processing apparatus 401, the above functions defined in the data processing method in the embodiments of the present disclosure are executed.

The electronic device provided by the embodiments of the present disclosure belong to the same concept with the method provided by the above embodiments. The technical details that are not specifically illustrated in this embodiment can be referred to the above embodiments and this embodiment has the same beneficial effects with the above embodiments.

An embodiment of the present disclosure provides a computer-readable storage medium, storing a computer program which, when run by a processor, performs the steps of the data processing method in any one of the foregoing method embodiments.

It should be noted that the above computer-readable medium in the present disclosure may be a computer-readable signal medium, a computer-readable storage medium, or any combinations of the two. The computer-readable storage medium may be, for example, but not limited to, a system, an apparatus or a device of electricity, magnetism, light, electromagnetism, infrared, or semiconductor, or any combinations of the above. More specific examples of the computer-readable storage medium may include but not be limited to: an electric connector with one or more wires, a portable computer magnetic disk, a hard disk drive, a random access memory (RAM), a read-only memory (ROM), an erasable programmable read-only memory (EPROM or flash memory), an optical fiber, a portable compact disk read-only memory (CD-ROM), an optical storage device, a magnetic storage device or any suitable combinations of the above. In the present disclosure, the computer-readable storage medium may be any visible medium that contains or stores a program, and the program may be used by an instruction executive system, apparatus or device or used in combination with it. In the present disclosure, the computer-readable signal medium may include a data signal propagated in a baseband or as a part of a carrier wave, it carries the computer-readable program code. The data signal propagated in this way may adopt various forms, including but not limited to an electromagnetic signal, an optical signal, or any suitable combinations of the above. The computer-readable signal medium may also be any computer-readable medium other than the computer-readable storage medium, and the computer-readable signal medium may send, propagate, or transmit the program used by the instruction executive system, apparatus or device or in combination with it. The program code contained on the computer-readable medium may be transmitted by using any suitable medium, including but not limited to: a wire, an optical cable, a radio frequency (RF) or the like, or any suitable combinations of the above.

In some implementation modes, a client and a server may be communicated by using any currently known or future-developed network protocols such as a HyperText Transfer Protocol (HTTP), and may interconnect with any form or medium of digital data communication (such as a communication network). Examples of the communication network include a local area network ("LAN"), a wide area network ("WAN"), an internet work (such as the Internet), and an end-to-end network (such as an ad hoc end-to-end network), as well as any currently known or future-developed networks.

The above-mentioned computer-readable medium may be included in the above-mentioned electronic device, or may also exist alone without being assembled into the electronic device.

The above computer-readable medium may bear one or more programs which, when run by the electronic device, cause(s) the electronic device to perform the above method.

The computer program code for executing the operation of the present disclosure may be written in one or more programming languages or combinations thereof, the above programming language includes but is not limited to object-oriented programming languages such as Java, Smalltalk, and C++, and also includes conventional procedural programming languages such as a "C" language or a similar programming language. The program code may be completely executed on the user's computer, partially executed on the user's computer, executed as a standalone software package, partially executed on the user's computer and partially executed on a remote computer, or completely executed on the remote computer or server. In the case involving the remote computer, the remote computer may be connected to the user's computer by any types of networks, including LAN or WAN, or may be connected to an external computer (such as connected by using an internet service provider through the Internet)_{∘}

The flow diagrams and the block diagrams in the drawings show possibly achieved system architectures, functions, and operations of systems, methods, and computer program products according to various embodiments of the present disclosure. At this point, each box in the flow diagram or the block diagram may represent a module, a program segment, or a part of a code, the module, the program segment, or a part of the code contains one or more executable instructions for achieving the specified logical functions. It should also be noted that in some alternative implementations, the function indicated in the box may also occur in a different order from those indicated in the drawings. For example, two consecutively represented boxes may actually be executed basically in parallel, and sometimes it may also be executed in an opposite order, this depends on the function involved. It should also be noted that each box in the block diagram and/or the flow diagram, as well as combinations of the boxes in the block diagram and/or the flow diagram, may be achieved by using a dedicated hardware-based system that performs the specified function or operation, or may be achieved by using combinations of dedicated hardware and computer instructions.

The involved units described in the embodiments of the present disclosure may be achieved by a mode of software, or may be achieved by a mode of hardware. Herein, the name of the unit/module does not constitute a limitation for the unit itself in some cases.

The functions described above in this article may be at least partially executed by one or more hardware logic components. For example, non-limiting exemplary types of the hardware logic component that may be used include: a field programmable gate array (FPGA), an application specific integrated circuit (ASIC), an application specific standard product (ASSP), a system on chip (SOC), a complex programmable logic device (CPLD) and the like.

In the context of the present disclosure, the machine-readable medium may be a visible medium, and it may contain or store a program for use by or in combination with an instruction executive system, apparatus, or device. The machine-readable medium may be a machine-readable signal medium or a machine-readable storage medium. The machine-readable medium may include but not limited to an electronic, magnetic, optical, electromagnetic, infrared, or semiconductor system, apparatus, or device, or any suitable combinations of the above. More specific examples of the machine-readable storage medium may include an electric connector based on one or more wires, a portable computer disk, a hard disk drive, RAM, ROM, EPROM (or a flash memory), an optical fiber, CD-ROM, an optical storage device, a magnetic storage device, or any suitable combinations of the above.

An embodiment of the present disclosure provides a computer program product which, when run on a computer, causes the computer to perform the data processing method described in any of the above method embodiments.

Those skilled in the art may easily conceive of other embodiments of the present disclosure after considering the specification and practicing the invention disclosed herein. The present disclosure is intended to cover any variations, purposes or applicable changes of the present disclosure. Such variations, purposes or applicable changes follow the general principle of the present disclosure and include common knowledge or conventional technical means in the technical field which is not disclosed in the present disclosure. The specification and embodiments are merely considered as illustrative, and the real scope and spirit of the present disclosure are pointed out by the appended claims.

It should be noted that, the present disclosure is not limited to the precise structures that have been described above and shown in the accompanying drawings, and can be modified and changed in many ways without departing from the scope of the present disclosure. The scope of the present disclosure is defined by the appended claims.

The foregoing are merely descriptions of the preferred embodiments of the present disclosure and are not intended to limit the present disclosure. Any modification, equivalent replacement, improvement and the like made within the spirit and principle of the present disclosure shall be included within the protection scope of the present disclosure.

## Claims

1. A data processing method, comprising:
obtaining first microphone position data to be processed;
calculating a difference between the first microphone position data and second microphone position data that is stored; and
discarding the first microphone position data in response to determining that there is no difference between the first microphone position data and the second microphone position data.

2. The data processing method according to claim 1, wherein the first microphone position data is current microphone position data to be processed, and the second microphone position data is historical microphone position data corresponding to the first microphone position data.

3. The data processing method according to claim 1, further comprising:
retaining the first microphone position data in response to determining that there is a difference between the first microphone position data and the second microphone position data.

4. The data processing method according to claim 3, further comprising:
replacing the second microphone position data that is stored with the first microphone position data.

5. The data processing method according to claim 1, wherein the obtaining first microphone position data to be processed comprises:
receiving data sent from a plurality of different data sources; and
obtaining the first microphone position data according to the data sent from the plurality of different data sources.

6. The data processing method according to claim 3, wherein the retaining the first microphone position data comprises:
sending data requested by a business processing module from difference data to the business processing module, wherein the difference data is difference data between the first microphone position data and the second microphone position data.

7. The data processing method according to claim 1, wherein the first microphone position data comprises first microphone position basic data and first microphone position additional data, and the second microphone position data comprises second microphone position basic data and second microphone position additional data; and
the calculating a difference between the first microphone position data and second microphone position data that is stored comprises:
calculating a difference between the first microphone position basic data and the second microphone position basic data, and calculating a difference between the first microphone position additional data and the second microphone position additional data.

8. The data processing method according to claim 7, wherein there being no difference between the first microphone position data and the second microphone position data comprises:
there being no difference between the first microphone position basic data and the second microphone position basic data, and there being no difference between the first microphone position additional data and the second microphone position additional data.

9. The data processing method according to claim 3, further comprising:
determining difference data between the first microphone position data and the second microphone position data; and
playing audio and video data in the difference data, or refreshing a display content of a live-streaming audio connection page according to the difference data.

10. A data processing apparatus, comprising:
an obtaining unit configured to obtain first microphone position data to be processed;
a calculation unit configured to calculate a difference between the first microphone position data and second microphone position data that is stored; and
a discarding unit configured to discard the first microphone position data in response to determining that there is no difference between the first microphone position data and the second microphone position data.

11. A device, comprising a processor and a memory, wherein the processor is configured to execute instructions stored in the memory to cause the device to perform the data processing method according to any one of claims 1 to 9.

12. A computer-readable storage medium, comprising instructions that instruct a device to perform the data processing method according to any one of claims 1 to 9.
